## Europäisches Patentamt

## European Patent Office

## Office européen des brevets

(19)

(11) Veröffentlichungsnummer: **0 093 406**
**B1**

(12) # EUROPÄISCHE PATENTSCHRIFT

(45) Veröffentlichungstag der Patentschrift:
23.07.86

(21) Anmeldenummer: 83104148.8

(22) Anmeldetag: 28.04.83

(51) Int. Cl.⁴: **B 28 D 5/04**

(54) Verfahren zum Sägen von Kristallstäben und Mehrblattinnenlochsäge zur Durchführung des Verfahrens.

(30) Priorität: 30.04.82 DE 3216200

(43) Veröffentlichungstag der Anmeldung:
09.11.83 Patentblatt 83/45

(45) Bekanntmachung des Hinweises auf die Patenterteilung:
23.07.86 Patentblatt 86/30

(84) Benannte Vertragsstaaten:
AT BE CH DE FR GB IT LI NL

(56) Entgegenhaltungen:
DE-A-2 739 257
DE-A-2 833 874
US-A-3 662 733

(73) Patentinhaber: **Wacker- Chemitronic Gesellschaft für Elektronik- Grundstoffe mbH, Johannes- Hess- Strasse 24, D-8263 Burghausen (DE)**

(72) Erfinder: **Lössl, Günter, Dr. Dipl.- Ing., Heckenstrasse 26, D-8261 Krichweidach (DE)**
Erfinder: **Zauhar, Helmut, Dipl.- Ing., Zürnstrasse 13, D-8263 Burghausen (DE)**
Erfinder: **Stock, Horst, Dipl.- Phys., Fraunhoferstrasse 5, B-8263 Burghausen (DE)**

EP 0 093 406 B1

## Beschreibung

Gegenstand der Erfindung ist ein Verfahren zum Zersägen von Kristallstäben oder -blöcken in Scheiben von 0,1 bis 1,0 mm Dicke, wobei der Kristallstab oder -block zunächst durch eine Abfolge von Schnitten in eine Vielzahl untereinander in Verbindung stehender Scheiben zersägt wird und in einem nachfolgenden zweiten Schritt diese Verbindung aufgetrennt wird.

Beim Zersägen von Kristallstäben aus beispielsweise Silicium, Galliumarsenid, Indiumphosphid, Saphir oder Gallium-Gadoliniumgranat in Scheiben von etwa 0,1 bis 1 mm Dicke werden üblicherweise Innenlochsägen eingesetzt. Zum Sägen dient dabei ein rotierendes kreisrundes, an seiner Außenseite eingespanntes Sägeblatt, das in der Mitte ein Loch mit einigen Zentimetern Durchmesser aufweist, wobei der mit Diamanten besetzte Lochumfang die eigentliche Schnittkante bildet. Nach dem bisher üblichen Sägeverfahren wird zunächst der in Scheiben zu zerteilende Kristallstab in das Loch im Zentrum des Sägeblattes in eine Tiefe entsprechend der erwünschten Scheibendicke abgesenkt. Dann wird entweder der Stab - manchmal auch unter Eigenrotation - nach außen gegen die Schnittkante bewegt (vgl. z. B. US-A-30 25 738 und US-A-30 39 235), oder das Sägeblatt wird durch den Kristallstab geführt. In der Endphase des Schnittes kann es jedoch wegen der geringen Dicke der abzutrennenden Scheibe (gewöhnlich ca. 400 µm), der Sprödhärte des Materials, der Sogwirkung des rotierenden Sägeblattes und dergleichen mehr zum unkontrollierten Brechen des nur noch schwachen Reststückes zwischen Scheibe und Stab, zu Ausbrüchen in der Scheibenoberfläche oder zum Bruch und Verlust der gesamten Scheibe kommen.

Dieses Problem wird bisher durch aufwendige Entnahmevorrichtungen (vgl. z. B. DE-A-30 10 867) zu lösen versucht. Zumeist wird dabei der zu zersägende Kristallstab auf eine Schnittleiste aufgekittet, welche beim Sägevorgang nicht vollständig durchtrennt wird und sowohl zur Halterung und Zustellung des Stabes als auch zur Stabilisierung der aufgetrennten Scheibe bis zur Entnahme dient. Derartige Anordnungen erfordern jedoch, abgesehen von dem apparativen Aufwand, eine Entnahme der jeweils abgesägten Einzelscheiben unmittelbar nach dem Trennvorgang und verhindern dadurch den für eine Steigerung der Schnittleistung unerläßlichen Einsatz von Innenlochsägen mit mehreren Sägeblättern.

Ferner ist aus der US-A 3 662 733 auch ein Verfahren zum Innenlochsägen von Kristallstäben bekannt geworden, bei dem die Scheiben vom Stab nicht einzeln abgetrennt und entnommen werden, sondern bei dem sie zu Gruppen verbunden bleiben und periodisch als Scheibengruppe entnommen werden. Auch bei diesem Verfahren kann auf aufwendige Entnahmevorrichtungen nicht verzichtet werden.

In der DE-A 28 33 874 ist schließlich ein Verfahren zur Herstellung von dünnen Marmorplatten aus Marmorblöcken beschrieben, bei dem der Block zunächst mittels eines Sägegatters in einer ersten Schnittserie in am Rand noch niteinander verbundene Teilplatten zersägt wird. Dann werden die Schnittfugen mit einer Verbindungsmasse gefüllt, und anschließend wird in einer zweiten Schnittserie in der Mitte zwischen den ersten Schnitten der Block in einzelne, jeweils über ein Randstück zusammengehaltene Doppelplatten zersägt. Jede einzelne dieser Doppelplatten kann dann in einem weiteren Schritt durch Abtrennen des Randstückes und Zerteilen der Verbindungsmasse in die gewünschten dünnen, einseitig beschichteten Marmorplatten zerlegt werden. Dieses Verfahren ist jedoch umständlich und erfordert großen zeitlichen und apparativen Aufwand.

Aufgabe der Erfindung war es somit, ein Verfahren anzugeben, das es ermöglicht, Kristallstäbe oder -blöcke ohne die genannten Nachteile zu zersägen, und das darüber hinaus insbesondere auch den Einsatz von Mehrblattinnenlochsägen gestattet.

Gelöst wird diese Aufgabe durch ein Verfahren der eingangs genannten Art, welches dadurch gekennzeichnet ist, daß gleichzeitig mindestens zwei Schnitte in das Werkstück gelegt werden, deren Abstand voneinander größer als die Summe aus der gewünschten Scheibendicke und der Schnittfugendicke ist, und daß diese mindestens zwei gleichzeitigen Schnitte mehrfach wiederholt werden, bis eine Vielzahl untereinander in Verbindung stehender Scheiben der gewünschten Dicke erzeugt ist, deren Verbindung dann aufgetrennt wird. Mehrblattinnenlochsägen zur Durchführung dieses Verfahrens sind dadurch gekennzeichnet, daß der Abstand der Sägeblätter voneinander größer ist als die Summe aus der gewünschten Scheibendicke und der Schnittfugendicke.

Nach diesem Verfahren lassen sich fein- oder polykristalline und vor allem grob- bis einkristalline Kristallstäbe oder -blöcke aus insbesondere Silicium, aber auch beispielsweise Germanium, Galliumarsenid, Galliumphosphid oder Indiumphosphid zersägen. Es eignet sich ebenso für Stäbe oder Blöcke aus Gallium-Gadoliniumgranat, Lithiumniobat, Saphir, Spinell, Rubin, Korund oder anderem, auch gepreßtem, gesintertem oder keramischem Material.

Gegenüber den herkömmlichen Verfahren hat die Erfindung vor allem den Vorteil, daß aufwendige Entnahmevorrichtungen nicht mehr erforderlich sind, und der Einsatz von Mehrblattinnenlochsägen, insbesondere Zweiblattinnenlochsägen anstelle der prinzipiell ebenfalls geeigneten Einblattinnenlochsägen möglich wird, wodurch eine deutliche Steigerung der Schnittleistung zu erzielen ist. Neben dieser besonders vorteilhaften Ánwendung beim Innenlochsägen kann die Erfindung grundsätzlich auch bei anderen Sägeverfahren eingesetzt werden.

Die Verbindung der Scheiben untereinander im Sinne der Erfindung kann durch das Eigenmaterial des Stabes oder Blockes selbst erfolgen, indem die einzelnen Abschnitte beim Sägen nicht vollständig voneinander getrennt werden. Sie kann bei vollständigem Zertrannen der Abschnitte auch durch Fremdmaterial etwa in Form von auf dem Werkstück fixiertem Schnittleisten oder Bandagen geschehen, die nicht vollständig zertrennt werden und die Stab- oder Blockabschnitte zusammenhalten. Insbesondere kann die Verbindung jedoch dadurch gebildet oder verstärkt werden, daß ein zusätzliches Verbindungsmittel zweckmäßig über eine geeignete Füllstation in die Schnittfugen eingebracht wird. Diese Maßnahme wirkt sich besonders dann vorteilhaft aus wenn Stab- oder Blockabschnitte mit einer Stärke von nur wenigen Scheibendicken zu zersägen sind, bei denen naturgemäß die Bruchgefahr am größten ist. Oft ist eine zusätzliche Verbindung zu zersägende Bereich nur noch etwa 5 - 15 Scheibendicken beträgt. In diesem Fall ist die Anwendung von festen oder mechanisch bewegten Bandagen, beispielsweise in Form stützender Zangen, vorteilhaft. Nach Zersägen des gesamten Stabes oder Blockes wird die Verbindung der Scheiben aufgetrennt, indem verbindende Stab- oder Blockreste z. B. durch Schnitt oder Schleifen entfernt und als verbindendes Fremdmaterial wirkende Schnittleisten oder Bandagen sowie eingebrachtes Verbindungsmittel auf- oder abgelöst werden.

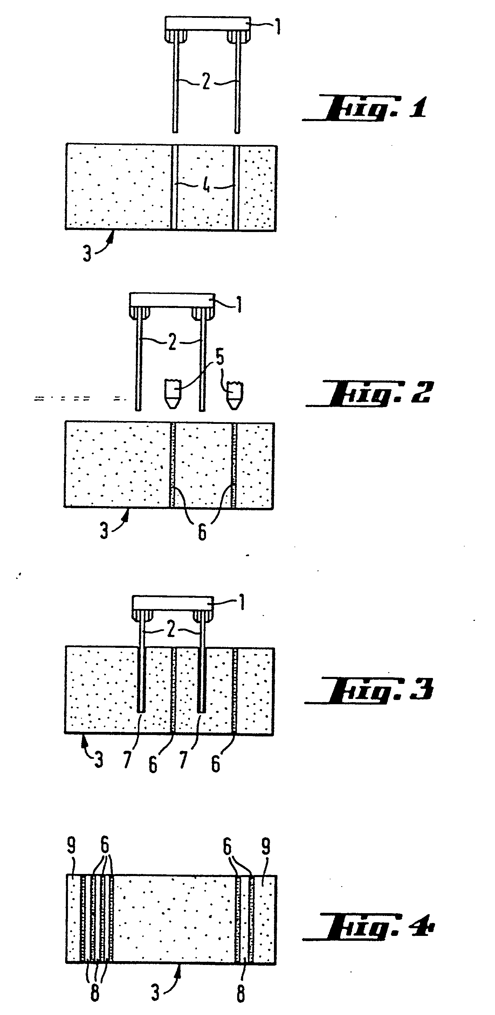

Anhand der Figuren 1 bis 4 wird das erfindungsgemäße Zersägen eines Kristallstabes mittels einer Zweiblattinnenlochsäge als Beispiel einer Mehrblattinnenlochsäge beispielhaft erläutert.

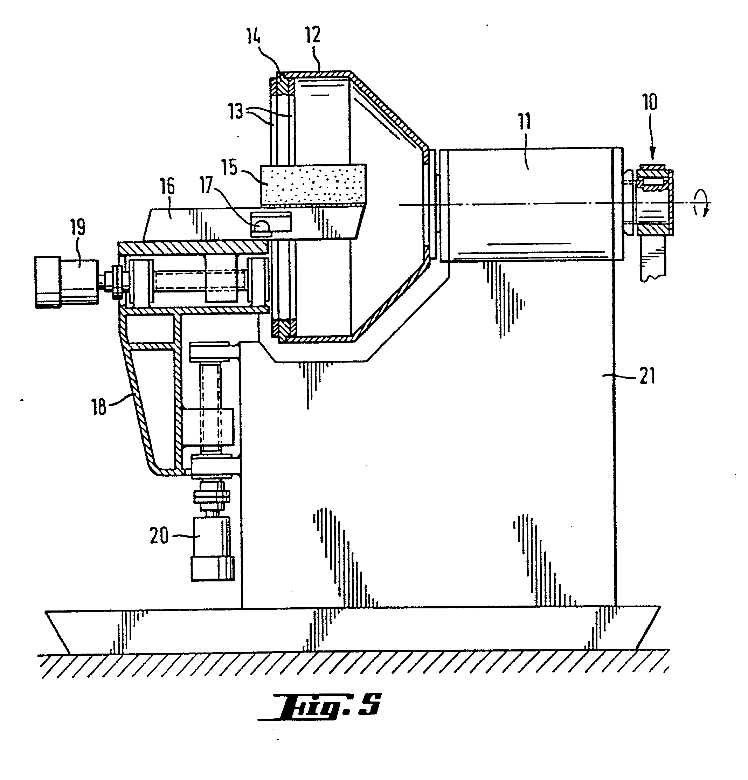

Figur 5 stellt modellhaft als bevorzugte Ausführungsform einer Mehrblattinnenlochsäge eine Zweiblattinnenlochsäge dar, die sich zur Durchführung des erfindungsgemäßen Verfahrens eignet.

Die in Figur 1 schematisch gezeigte Innenlochsäge 1 besitzt zwei parallel ausgerichtete Sägeblätter 2, mit deren Hilfe der Kristallstab 3 in drei durch die Schnittfugen 4 getrennte Stababschnitte zersägt wird. Der Kristallstab kann beispielsweise ein durch tiegelfreies Zonenziehen oder Tiegelziehen nach Czochralski hergestellter Stab aus einkristallinem Silicium sein, aber auch ein aus gegossenem grobkristallinem, besonders für Solarzellen geeignetem Silicium mit Kolumnarstruktur bestehender Block, beispielsweise mit dem gebräuchlichen quadratischen Querschnitt von 100 x 100 mm. Der Sägevorgang kann dabei so weit geführt werden daß die Stababschnitte vollständig voneinander getrennt werden; es kann jedoch auch ein unzersägter Stabrest als Verbindung zwischen den einzelnen Stababschnitten belassen werden.

Figur 2 zeigt schematisch eine Füllstation 5, über die ein Verbindungsmittel 6 in die Schnittfugen zwischen den Stababschnitten eingebracht wird. Dieser Schritt kann im Grunde unterbleiben, wenn die Stababschnitte nicht vollständig voneinander getrennt sind und beispielsweise durch einen Stabrest oder, bei vollständig durchschnittenem Stab, durch eine außen aufgekittete, unzertrennte Bandage zusammengehalten werden. Auch in diesem Fall kann aber die Verbindung durch ein in die Schnittfugen eingebrachtes Verbindungsmittel zusätzlich stabilisiert werden, so daß sich die Bruchgefahr verringert. Bei nicht mehr miteinander verbundenen Stababschnitten ist es jedoch unerläßlich, sie durch Einbringen eines Verbindungsmittels erneut miteinander zu verbinden.

Gemäß Figur 3 kann der folgende Schnitt 7 an eine Stelle des Kristallstabes gelegt werden, die vom vorausgegangenen Schnitt einen größeren Abstand als die gewünschte Scheibendicke hat. Zweckmäßig wird man als Schnittabstand ganzzahlige Vielfache der Summe aus gewünschter Scheiben- und Schnittfugendicke wählen, obwohl es auch möglich ist, beliebige Abschnitte des Kristallstabes auszusparen, wenn sie beispielsweise Verunreinigungen, mechanische Beschädigung und dergleichen aufweisen. Eine Schnittfolge, nach der der Kristallstab durch im Abstand der Scheibendicke aufeinanderfolgende Schnitte Scheibe für Scheibe zersägt wird, ist prinzipiell ebenso möglich, birgt aber z.B. die Gefahr des Verschiebens von Scheiben in sich, etwa wenn die Verbindung zwischen der abgesägten Scheibe und dem Kristallstab vor dem nächsten Schnitt nicht vollständig ausgehärtet ist.

In Figur 4 ist die nach Abschluß der Schnittfolge entstandene Vielzahl miteinander verbundener Scheiben 8. der gewünschten Dicke dargestellt. Die beiden Randstücke 9, die in der Regel dicker als die Scheiben selbst sind, werden, beispielsweise wegen der meist erhöhten Konzentration an Verunreinigungen, oder der im Falle von grobkristallinen Siliciumblöcken bisweilen mangelhaften Kolumnarstruktur,verworfen oder z.B. als Bandage auf zu zersägenden Blöcken fixiert.Nach Entfernen des Verbindungsmittels und Reinigung lassen sich dann die Einzelscheiben beispielsweise im Fall von Silicium zu Solarzellen oder elektronischen Bauelementen weiterverarbeiten.

Als geeignete Verbindungsmittel zwischen den Stababschnitten kommen allgemein Substanzen in Frage, die rasch eine feste und mechanisch widerstandsfähige Verbindung zwischen den Stababschnitten bilden, welche sich aber auch leicht wieder lösen läßt. Diese Forderung wird beispielsweise von Wachs erfüllt, das in geschmolzener Form in die Schnittfuge eingebracht wird, dort unter Bildung einer stabilen Verbindung der Stababschnitte aushärtet und schließlich durch erneutes Aufschmelzen wieder entfernt werden kann. Geeignet sind auch die unter DIN 16920 zusammengefaßten Klebstoffe, insbesondere Konstruktionsklebstoffe, wie beispielsweise Cyanacrylate, Schmelzklebstoffe oder auch Metallkitte, die beispielsweise durch Lösungsmittelzusatz oder Erwärmen wieder lösbare Verbindungen ausbilden. Daneben steht als besonders preisgünstiges, allerdings relativ langsam aushärtendes Verbindungsmittel Gips, zweckmäßig als Aufschlämmung, zur Verfügung. Je nach Stabilität der hergestellten Verbindung und verwendetem Verbindungsmittel kann auf ein vollständiges Ausfüllen der Schnittfuge verzichtet werden, so daß lediglich stellen- oder punktweise eine Verbindung zwischen den Stababschnitten geschaffen wird. Dies ist insbesondere dann ausreichend, wenn der Kristallstab beim Schnittvorgang nicht vollständig durchgetrennt wird.

Dann läßt sich der die Verbindung zwischen den Scheiben bildende Stabrest bei Kristallstäben mit rundem Querschnitt zweckmäßig dadurch entfernen, daß an dieser Stelle durch Sägen oder Schleifen in Längsrichtung der Scheibenflat angebracht wird. Blöcke für quadratische Scheiben können beispielsweise rechteckigen Querschnitt, z. B. 103 x 100 mm besitzen oder, bei quadratischem Querschnitt, auf einer oder mehreren Seiten mit einer Bandage versehen sein. Werden dann quadratische Scheiben mit 100 mm Seitenlänge aus dem Block gesägt, so bildet der unzertrennt bleibende Blockrest bzw. die Bandage zunächst die Verbindung der Scheiben. Nach Auftrennen durch Schnitt, Schleifen oder Ablösen erhält man schließlich Scheiben der gewünschten Größe. Derartige, aus einer Vielzahl untereinander verbundener Scheiben bestehende Blöcke lassen sich auch, gegebenenfalls nach Entfernen des Verbindungsmittels, bei geeigneter Scheiben- und Schnittfugendicke ineinanderstecken, so daß die Verbindungsstege einander gegenüberliegen und gleichzeitig von beiden Seiten aus abgetrennt werden können.

Da bei dem erfindungsgemäßen Verfahren die abgesägten Scheiben mit den angrenzenden Stababschnitten in Verbindung bleiben und somit nicht unmittelbar nach jedem Trennvorgang entnommen werden müssen, kann der zu zersägende Kristallstab oder -block ohne besonderen Aufwand auf dem zu seiner Halterung vorgesehenen Träger befestigt werden. Insbesondere lassen sich Blöcke mit einer ebenen Seitenfläche, wie etwa die meist aus einem größeren Block gesägten Blöcke aus Solarsilicium mit vorzugsweise quadratischem Querschnitt und Kolumnarstruktur leicht aufkleben, aufkitten oder, wenn Verunreinigungen durch Klebstoffreste vermieden werden sollen, auch z.B. mit Wasser auffrieren. Kristallstäbe mit beispielsweise rundem Querschnitt lassen sich ggf. mit Hilfe einer oder mehrerer aufgekitteter oder -geklebter Schnittleisten leichter befestigen. Auch abnehmbare Träger, die zur bequemeren Befestigung des zu zersägenden Kristallstabes oder -blockes vom Gerät abgenommen und anschließend mit beispielsweise aufgeklebtem Werkstück wieder angebracht werden, können zweckmäßig eingesetzt werden. Eine weitere Möglichkeit liegt darin, die Stäbe oder Blöcke mittels mechanischer Einspannvorrichtungen auf dem Träger zu befestigen. Dies hat den Vorteil, daß der fertig gesägte, aus miteinander verbundenen Scheiben bestehende Stab besonders leicht wieder entnommen werden kann.

Die Verwendung von mobilen, abnehmbaren Trägern, die in einer reproduzierbaren, genau festgelegten Position wieder am Gerät anzubringen sind, hat den Vorteil, daß sich bereits während des Sägens ein nächster Träger mit befestigtem Werkstück vorbereiten läßt. Nach Abschluß des Sägevorganges werden dann lediglich die beiden Träger mit den darauf befindlichen Werkstücken ausgetauscht, so daß der Sägevorgang selbst sofort weitergeführt werden kann, während für das zeitaufwendige Abnehmen der fertig gesägten, miteinander verbundenen Scheiben von dem vom Gerät entfernten Träger sowie für das langwierige Befestigen des als nächstes vorgesehenen Werkstückes die zum Zersägen des ausgetauschten Werkstückes benötigte Zeit zur Verfügung steht.

In Figur 5 ist beispielhaft eine zur Durchführumg des erfindungsgemäßen Verfahrens geeignete Zweiblattinnenlochsäge dargestellt. Sie besteht aus einem mit dem Antrieb 10 verbundenen rohrförmigen Antriebsträger 11, der in eine sich becherartig aufweitende Spannringaufnahme 12 übergeht. Diese trägt den im vorliegenden Fall für zwei Sägeblätter 13 vorgesehenen Spannring 14, mit dem die beiden Sägeblätter exakt parallel ausgerichtet und gespannt werden können. Durch Verwendung eines für nur ein bzw. mehrere Sägeblätter geeigneten Spannrings läßt sich die vorliegende Innenlochsäge auch in eine Ein- bzw. Mehrblattanordnung umrüsten. Die Sägeblätter rotieren um das Werkstück 15, also den zu zersägenden Kristallstab oder -block, der auf der Werkstückhalterung 16 befestigt ist. Innerhalb des Innenlochbereiches befindet sich auch die Spaltfüllstation 17, mit deren Hilfe nach jedem Sägeschritt die entstandenen Schnittfugen mit einem Verbindungsmittel gefüllt werden können. Die Werkstückhalterung ist über eine Konsole 18 mit der Zustelleinrichtung 19 und der Vorschubeinrichtung 20 verbunden, durch welche das Werkstück in die gewünschte Schnittposition gebracht und den Sägeblättern entgegen bewegt wird. Die gesamte Anordnung ruht auf einem hier nur schematisch angedeuteten Gestell 21.

Zweckmäßig wird die Zustellung des Werkstückes nicht, wie prinzipiell möglich, von Hand gesteuert sondern durch einen in Figur 5 nicht dargestellten Rechner. Dieser kann aus vorgegebenen Parametern, wie beispielsweise Stablänge, Scheiben-, Schnittfugen- und Randbereichsdicke im Hinblick auf maximale Scheibenausbeute unter Berücksichtigung der einzuhaltenden Toleranzen, der Anzahl der Sägeblätter ggf. der benötigten Aushärtzeit des Verbindungsmittels oder nicht zu zersägender Bereiche des Werkstückes eine optimierte Schnittfolge ermitteln und dann beispielsweise mit Hilfe eines Schrittmotors das Werkstück in die entsprechende Schnittposition bringen. Derartige rechnergesteuerte Zustelleinrichtungen werden inzwischen bei einer Vielzahl von technischen Bearbeitumgsvorgängen eingesetzt und sind dem Fachmann geläufig.

Über den Rechner läßt sich nach beendetem Schnitt äuch das Einbringen des Verbindungsmittels in die Schnittfugen steuern. Bei stationärer Spaltfüllstation in versetzter Position zu den Sägeblättern wird dann mittels der Zustellvorrichtung die zu befüllende Schnittfuge an das Füllorgan, beispielsweise eine Düse mit geeignetem Querschnitt, herangeführt und nach Bedarf ganz, teilweise oder punktweise mit dem gewählten Verbindungsmittel ausgefüllt. Besonders günstig werden bei einer stationären Spaltfüllstation jedoch die Füllorgane in die selbe Position wie die Sägeblätter gebracht, da dann nach beendetem Sägevorgang ohne Verschiebung des Werkstückes das Verbindungsmittel in die Schnittfugen eingebracht werden kann. Neben einer solchen stationären Ausführung der Spaltfüllstation ist auch eine bewegliche Ausführung möglich, bei der nicht das Werkstück bewegt wird, sondern die Station mit dem Füllorgan an die Schnittfugen herangeführt wird. Eine solche Version wird man insbesondere bei solchen Innenlochsägen in Betracht ziehen, bei denen nicht das Werkstück, sondern die Sägeblätter in die jeweils gewünschte Schnittposition gebracht werden. Abgesehen von der stationären oder beweglichen Variante sind für die Spaltfüllstation in Abhängigkeit von dem verwendeten Verbindungsmittel vielerlei Ausführungsformen denkbar, die dem Fachmann geläufig sind, deren verschiedene Ausgestaltung jedoch den grundlegenden Erfindungsgedanken nicht berührt.

Dies gilt allgemein für Variationen der Kinematik der vorliegenden Anordnung, wenn beispielsweise die Schnittpositionierung durch bewegliche Sägeblätter anstelle eines beweglichen Werkstückes geschieht oder der Schnitt durch eine Bewegung der Sägeblätter durch das stationäre Werkstück anstelle einer Bewegung des Werkstückes in Richtung Außenwand der Sägeblätter. Auch ist grundsätzlich eine vertikale Anordnung des zu zersägenden Kristallstabes oder -blockes mit horizontaler Schnittführung möglich, wenngleich eine liegende, horizontale Anordnung und vertikaler Schnitt wegen der dann in Schnittrichtung wirkenden Schwerkraft für die Werkstückhalterung und die Einbringung des Verbindungsmittels günstig ist.

Der eigentliche Sägevorgang kann bei Mehrblattinnenlochsägen, insbesondere bei der vorstehend beschriebenen Zweiblattanordnung, analog zum Stand der Einblattinnenlochsäge-Technik durchgeführt werden. Maßnahmen, wie beispielsweise die Wahl eines geeigneten Sägeblattes, Einspannen desselben Kühlung beim Sägevorgang und dergleichen sind dem Fachmann vertraut und bedürfen keiner weiteren Erläuterung. Auch der Abstand der Sägeblätter untereinander kann innerhalb weiter Grenzen variiert werden. Er sollte, bei Verwendung von n Sägeblättern, den n-ten Teil der Werkstücklänge nicht überschreiten, d.h. bei 2 Sägeblättern höchstens die halbe Stab- oder Blocklänge betragen, um eine optimale Schnittführung ohne Leerlauf eines Sägeblattes zu ermöglichen. Der Minimalabstand sollte so groß gewählt werden, daß der zwischen zwei rotierenden Sägeblättern befindliche Abschnitt des Werkstückes auch bei vollständiger Abtrennung nicht fortgeschleudert oder verschoben werden kann.

Mit Hilfe der erfindungsgemäßen Zweiblattinnenlochsäge lassen sich wegen der großen Toleranzen besonders günstig grobkristalline Siliciumblöcke mit Kolumnarstruktur mit beispielsweise 250 mm Länge und 100 x 100 mm Querschnitt in ca. 350 $\mu$m dicke Scheiben zersägen. Dazu wird der mittels Paraffinwachs bereits auf einem Träger befestigte Block in der Werkstückhalterung angebracht und mit Hilfe eines Schrittmotors mit Kugelrollspindel in die vom Rechner aufgrund der eingegebenen Parameter Scheiben- und Schnittfugendicke, Randstückdicke und Schnittoleranz ermittelte Schnittposition gebracht. Ein weiterer Antrieb, z. B. mit Kugelrollspindel bewegt nun den Block auf die parallel im Abstand von 50 mm rotierenden Sägeblätter zu, bis er vollständig durchtrennt ist. Nun wird der Block wieder in die Ausgangsstellung vor Schnittbeginn gebracht, und aus den in der selben Position wie die Sägeblätter befindlichen, heizbaren Düsen der Füllstation wird ein Paraffinwachs in die Schnittfugen eingebracht. Während der Aushärtzeit wird die nächste, mehrere Scheibendicken entfernte Schnittposition angefahren, und der nächste Schnitt beginnt. Dieser Vorgang wiederholt sich, bis der Kristallblock in eine Vielzahl miteinander durch Paraffinwachs verbundener, ca. 350 $\mu$m dicker Scheiben zerteilt ist. Diese werden dann mitsamt dem Träger aus der Werkstückhalterung genommen und durch erneutes Aufschmelzen des Wachses voneinander getrennt, während ein inzwischen vorbereiteter Träger mit einem darauf befestigten unzersägten Kristallblock zum Zersägen in der Werkstückhalterung angebracht wird.

Gemäß einer günstigen Ausführungsform des erfindungsgemäßen Verfahrens wird eine Möglichkeit vorgesehen, das zu zersägende Werkstück in einer vorzugsweise horizontalen oder vertikalen Ebene drehbar anzuordnen, wobei die Drehachse innerhalb oder außerhalb des Werkstückes liegen kann und senkrecht zu dessen Längsachse verläuft. Dann kann beispielsweise ein Stab sowohl von einem Ende, wie auch nach Drehung um 180°, von seinem anderen Ende ausgehend gesägt werden. Eine Möglichkeit besteht z. B. darin, den Stab oder Block von einem Ende her bis etwa zur Hälfte zu sägen, ihn dann um 180° zu drehen und schließlich, vom anderen Ende her, den restlichen Teil zu sägen. Möglich ist

auch fertig gesägte Stabteile an einem Stabende abzutrennen, während nach einer Drehung um 180° das andere Stabende in Bearbeitung genommen wird. Auf diese Weise lassen sich durch eine Folge der Maßnahmen Sägen eines Stabteiles vom einem Stabende her-Drehung um 180° - Abtrennung des gesägten Stabteils - Sägen eines Stabteils vom anderen Stabende her - Drehung um 180° auch sehr lange Stäbe mit kleinen Anlagen sägen. Die jeweils abgetrennten, gesägten Stabteile werden dann durch Entfernen der Verbindung in die einzelnen Scheiben aufgetrennt. Damit läßt sich das erfindungsgemäße Verfahren auch in Vorrichtungen durchführen, die von ihrer Größe her nicht zur Aufnahme des gesamten zu zersägenden Werkstückes geeignet sind. Weiterhin sind Ausführungsformen denkbar, bei denen mehrere, insbesondere zwei Werkstücke auf einem drehbaren Träger angeordnet sind. Durch Drehung des Trägers werden diese dann abwechselnd in eine Position gebracht, in der sie gesägt werden können und in eine Position, in der z. B. gesägte Stabteile abgetrennt, gemessen oder mit Verbindungsmitteln versehen werden können.

Somit bieten das erfindungsgemäße Verfahren und die zu seiner Durchführung geeignete Zweiblattinnenlochsäge die Möglichkeit, Kristallstäbe oder -blöcke ohne aufwendige Entnahmevorrichtungen und unter geringem Bruchrisiko mittels einer Mehrblattanordnung in dünne Scheiben zu zersägen.

**Patentansprüche**

1. Verfahren zum Zersägen von Kristallstäben oder -blöcken (3) in Scheiben von 0,1 bis 1,0 mm Dicke, wobei der Kristallstab -block zunächst durch eine Abfolge von Schnitten (7) in eine Vielzahl untereinander in Verbindung stehender Scheiben (8) zersägt wird und in einem nachfolgenden zweiten Schritt diese Verbindung aufgetrennt wird, dadurch gekennzeichnet, daß gleichzeitig mindestens zwei Schnitte in das Werkstück (3) gelegt werden, deren Abstand voneinander größer als die Summe aus der gewünschten Scheibendicke und der Schnittfugendicke ist, und daß diese mindestens zwei gleichzeitigen Schnitte mehrfach wiederholt werden, bis eine Vielzahl untereinander in Verbindung stehender Scheiben (8) der gewünschten Dicke erzeugt ist, deren Verbindung dann aufgetrennt wird.

2. Verfahren nach Anspruch 1, dadurch gekennzeichnet, daß bei jedem Schnitt (7) eine Verbindung aus Eigen- oder Fremdmaterial zwischen den Stab- oder Blockabschnitten belassen wird, und daß erst nach Zersagen des gesamten Stabes oder Blockes (3) zur Auftrennung der Scheiben (8) diese Verbindung durch Längsschnitt, Abschleifen oder Ablösen entfernt wird.

3. Verfahren nach Anspruch 1 oder 2, dadurch gekennzeichnet, daß zur Bildung oder Verstärkung der Verbindung zwischen den Stab- oder Blockabschnitten ein Verbindungsmittel (6) in die Schnittfugen (4) eingebracht wird.

4. Verfahren nach einem oder mehreren der Ansprüche 1 bis 3 dadurch gekennzeichnet daß die Schnitte (7) im Abstand ganzzahliger Vielfacher der Summe aus Scheiben- und Schnittfugendicke in den Kristallstab oder -block gelegt werden.

5. Verfahren nach einem oder mehreren der Ansprüche 1 bis 4, dadurch gekennzeichnet, daß ein oder mehrmals der zu zersägende Stab oder Block von einem Ende ausgehend zum Teil zersägt wird, daß er dann um 180° gedreht wird, wobei die Drehachse im rechten Winkel zu seiner Längsachse steht, und daß er dann vom anderen Ende ausgehend zersägt wird.

6. Mehrblattinnenlochsäge zur Durchführung des Verfahrens nach Anspruch 1 und 2, gekennzeichnet durch einen Abstand der Sägeblätter (13) voneinander, welcher grösser ist als die Summe aus der gewünchten Scheibendicke und der Schnittfugendicke.

7. Mehrblattinnenlochsäge zur Durchführung des Verfahrens nach Anspruch 3 gekennzeichnet durch eine zum Einbringen des Verbindungsmittels geeignete zusätzliche Spaltfüllstation (17).

8. Mehrblattinnenlochsäge nach den Ansprüchen 6 und 7. gekennzeichnet durch rechnergesteuerte Zustellung des zu zersägenden Kristallstabes oder -blockes (15) in die geeignete Schnittposition.

9. Verwendung der Mehrblattinnenlochsäge nach den Ansprüchen 6 bis 8 zum Zersägen von als Solarzellengrundmaterial geeigneten Stäben oder Blöcken aus Silicium.

**Claims**

1. Method for sawing crystalline rods or blocks (3) into wafers having a thickness of from 0.1 to 1.0 mm, the crystalline rod or block first being sawn, by a sequence of cuts (7), into a plurality of wafers (8) that are connected to one another and this connection being broken in a subsequent second step, characterised in that there are made simultaneously in the workpiece (3) at least two cuts whose distance from one another is greater than the sum of the desired wafer thickness and the cutting gap thickness, and that these simultaneous cuts, of which there are at least two, are repeated a number of times until there have been produced a plurality of wafers (8) of the desired thickness that are connected to one another, this connection then being broken.

2. Method according to claim 1, characterised in that, in the case of each cut (7), a connection consisting of the actual material of the rod or block or of foreign material is retained between the portions of the rod or block and that that connection is removed by longitudinal cutting, grinding or loosening to separate the wafers (8) only after the whole rod or block (3) has been sawn.

3. Method according to claim 1 or 2, characterised in that a connecting agent (6) is introduced into the cutting gaps (4) to form or strengthen the connection between the portions of the rod or block.

4. Method according to one or more of claims 1 to 3, characterised in that the cuts (7) are made in the crystalline rod or block at spacings of integral multiples of the sum of the wafer thickness and the cutting gap thickness.

5. Method according to one or more of claims 1 to 4, characterised in that the rod or block to be sawn is sawn partially once or several times, starting from one end, that it is then rotated through 180°, the axis of rotation being at right angles to its longitudinal axis, and that it is then sawn starting from the other end.

6. Multiple-blade internal-hole saw for carrying out the method according to claims 1 and 2, characterised in that the saw blades (13) are at a distance from one another that is greater than the sum of the desired wafer thickness and the cutting gap thickness.

7. Multiple-blade internal-hole saw for carrying out the method according to claim 3, characterised by an additional gap filling station (17) suitable for introducing the connecting agent.

8. Multiple-blade internal-hole saw according to claims 6 and 7, characterised by computer-controlled feed, into a suitable cutting position, of the crystalline rod or block (15) to be sawn.

9. Use of the multiple-blade internal-hole saw according to claims 6 to 8, for sawing rods or blocks of silicon suitahle as base material for solar cells.

## Revendications

1. Procédé pour scier des barres ou blocs cristallins en disques de 0,1 à 1,0 mm d'épaisseur, la barre ou bloc cristallin (3) étant initialement scié par une succession de coupes (7) en un grand nombre de disques (8) reliés entre eux et cette liaison étant sectionnée dans une seconde étape suivante, caractérisé en ce qu'on réalise simultanément dans la pièce au moins deux coupes dont l'espacement mutuel est supérieur à la somme de l'épaisseur désirée pour les disques et de l'épaisseur des saignées de coupe et en ce qu'au moins ces deux coupes réalisées simultanément sont répétées plusieurs fois jusqu'à ce qu'on produise un grand nombre de disques (8) ayant l'épaisseur désirée et reliés entre eux, cette liaison étant ensuite sectionnée

2. Procédé selon la revendication 1, caractérisé en ce que, pour chaque coupe (7), une liaison en matière de base ou en matière étrangère est laissée entre les parties de la barre ou du bloc, et en ce que, après sciage de l'ensemble de la barre ou du bloc (3), cette liaison est enlevée, en vue de la séparation des disques (8), par découpage longitudinal, par meulage ou par dissolution.

3. Procédé selon la revendication 1 ou 2, caractérisé en ce que, pour la formation ou le renforcement de la liaison entre les parties de la barre òu du bloc, un agent de liaison (6) est mis en place dans les intervalles de coupe (4).

4. Procédé selon l'une ou plusieurs des revendications 1 à 3, caractérisé en ce que les coupes (7) sont réalisées dans la barre ou le bloc cristallin avec un espacement égal à un multiple entier de la somme des épaisseurs des disques et des intervalles de coupe.

5. Procédé selon l'une ou plusieurs des revendications 1 à 4, caractérisé en ce que la barre ou bloc à scier est scié en partie une ou plusieurs fois à partir d'une extrémité, en ce qu'ensuite la barre ou le bloc est tourné de 180°, l'axe de rotation étant orienté perpendiculairement à son axe longitudinal, et en ce qu'ensuite la barre ou le bloc est scié à partir de l'autre extrémité.

6. Scie à trou intérieur et à lames multiples pour la mise en oeuvre du procédé selon les revendications 1 et 2, caractérisée par un espacement des lames de scie (13) l'une de l'autre qui est supérieur à la somme de l'épaisseur désirée pour les disques et de l'épaisseur des intervalles de coupe.

7. Scie à trou intérieur et à lames multiples pour la mise en oeuvre du procédé selon la revendication 3, caractérisée par un poste additionnel de remplissage d'intervalles (17) approprié pour la mise en place de l'agent de liaison.

8. Scie à trou intérieur et à lames multiples selon les revendications 6 et 7, caractérisée par une présentation, commandée par calculateur, de la barre ou du bloc cristallin à scier (15) dans la position de coupe appropriée.

9. Utilisation de la scie à trou intérieur et à lames multiples selon les revendications 6 à 8 pour le sciage de barres ou blocs en silicium appropriés pour former la matiére de base de piles solaires.

_Fig: 1_

_Fig: 2_

_Fig: 3_

_Fig: 4_

*Fig. 5*